# EUROPÄISCHE PATENTSCHRIFT

(11) **EP 2 427 136 B1**
(45) Veröffentlichungstag und Bekanntmachung des Hinweises auf die Patenterteilung: **16.07.2014**
(21) Anmeldenummer: 10708090.5
(22) Anmeldetag: 20.01.2010
(51) Int. Cl.: A61C 8/00

(54) **ZAHNMEDIZINISCHES IMPLANTAT**
DENTAL IMPLANT
IMPLANT DENTAIRE

(30) Priorität: 21.01.2009 DE 102009005573; 12.06.2009 DE 102009025200; 10.12.2009 DE 102009057502
(43) Veröffentlichungstag der Anmeldung: 14.03.2012
(73) Patentinhaber: Neumeyer, Stefan Dr., D-93458 Eschlkam (DE)
(72) Erfinder: Neumeyer, Stefan Dr., D-93458 Eschlkam (DE)
(74) Vertreter: Graf Glück Kritzenberger
(86) Internationale Anmeldenummer: PCT/DE2010/000049
(87) Internationale Veröffentlichungsnummer: WO 2010/083809

(56) Entgegenhaltungen:
- DE-A1- 4 040 872
- DE-A1- 10 254 802
- DE-A1- 19 638 232
- DE-A1-102007 023 864
- US-A- 6 039 568
- US-B1- 6 402 517
- CHAMPA JAYASURIYA A ET AL: "Dissolution behavior of biomimetic minerals on 3D PLGA scaffold" SURFACE AND COATINGS TECHNOLOGY, ELSEVIER, AMSTERDAM, NL LNKD- DOI:10.1016/J.SURFCOAT.2005.11.032, Bd. 200, Nr. 22-23, 20. Juni 2006 (2006-06-20), Seiten 6336-6339, XP024995800 ISSN: 0257-8972 [gefunden am 2006-06-20]

## Beschreibung

Die Erfindung bezieht sich auf ein zahnmedizinisches Implantat gemäß Oberbegriff Patentanspruch 1. Zahnimplantate sind in unterschiedlichsten Ausführungen bekannt.

Ein Zahnimplantat mit den Merkmalen des Oberbegriffs des Patentanspruches 1 ist bekannt (DE 102 54 802 A1), und zwar bestehend aus einem beispielsweise als Implantatkörper ausgebildeten Träger aus einem keramischen Werkstoff und aus einer diesen Träger ringförmig umschließenden Schicht aus synthetischem Glas oder einer synthetischen Glaskeramik, wobei in einen zwischen dem Träger und der Schicht gebildeten Spalt ein bioaktives Material, beispielsweise Hydroxylapatit und/oder Kalziumsulfat und/oder Aluminiumhydroxylapatit eingebracht ist.

Bekannt ist weiterhin ein im Dentalbereich implantierbarer Gewebeträger beispielsweise in Form eines Implantatkörpers (DE 40 40 872 A1, US 6 402 517 B1), der an seiner Außenfläche mit einer Schicht aus einem natürlichen Gewebe versehen ist. Der Gewebeträger besteht hierfür aus einem Knochen-, Knochenersatz- oder Knorpelmaterial, d.h. aus einem natürlichen Material.

Aufgabe der Erfindung ist es, ein Zahnimplantat aufzuzeigen, welches verbesserte medizinische Eigenschaften aufweist, und zwar u.a. hinsichtlich einer beschleunigten vollständigen oder zumindest teilweisen Wiederherstellung des das gesetzte Implantat umgebenden dento-alveolären Faserapparates und/oder hinsichtlich eines beschleunigten Anwachsens des Binde- und Epithelgewebes an das Implantat und/oder hinsichtlich einer verbesserten Verankerung im Knochengewebe.

Zur Lösung dieser Aufgabe ist ein Zahnimplantat mit einem Implantatkörper vorgesehen, wobei der Implantatkörper an wenigstens einem Teilbereich seiner für ein Einwachsen des Knochen- und/oder Weichgewebes dienenden Außenfläche mit einer Struktur versehen ist, die auf einer außen liegenden Seite eines mit dem Implantatkörper verbundenen Substrates vorgesehen ist, welches den Implantatkörper in Form wenigstens einer Manschette zirkular umschließt und dicht, insbesondere auch bakteriendicht, mit dem Implantatkörper verbunden ist, dadurch gekennzeichnet, dass die Struktur aus einem natürlichen Gewebe besteht, und dass das Substrat durch Verkleben mit dem Implantatkörper verbunden ist.

Die Struktur sind so ausgeführt, dass bereits in kurzer Zeit eine vollständige oder teilweise Wiederherstellung des dento-alveolären Faserapparates und/oder ein direktes Einwachsen bzw. Anwachsen des Binde- und Epithelgewebes erreicht wird, um einen bakteriendichten, stabilen, belastungsfähigen Verbund zu dem das Implantat umgebenden Weichgewebe herzustellen. Hierfür bestehen die Weichgewebsmanschette oder -teilmanschette bzw. deren Struktur vorwiegend zumindest teilweise aus solchen Anteilen des Zahnhalteapparates des supra-alveolären dento-gingivalen Faserapparates, die die beschleunigte Wiederherstellung des dento-alveolären Faserapparates und/oder das beschleunigte direkte Einwachsen bzw. Anwachsen des Binde- und Epithelgewebes bewirken.

Weiterbildungen, Vorteile und Anwendungsmöglichkeiten der Erfindung ergeben sich auch aus der nachfolgenden Beschreibung von Ausführungsbeispielen und aus den Figuren.

Die Erfindung wird im Folgenden anhand der Figuren an Ausführungsbeispielen näher erläutert. Es zeigen:

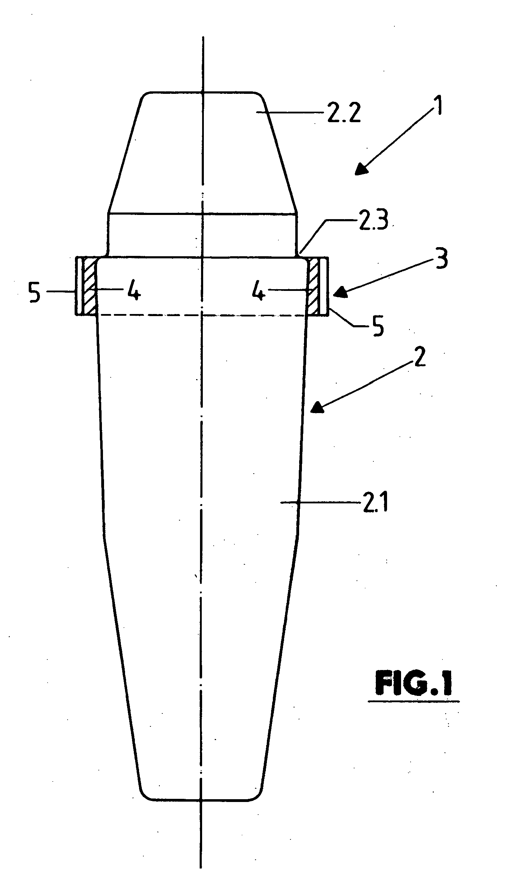

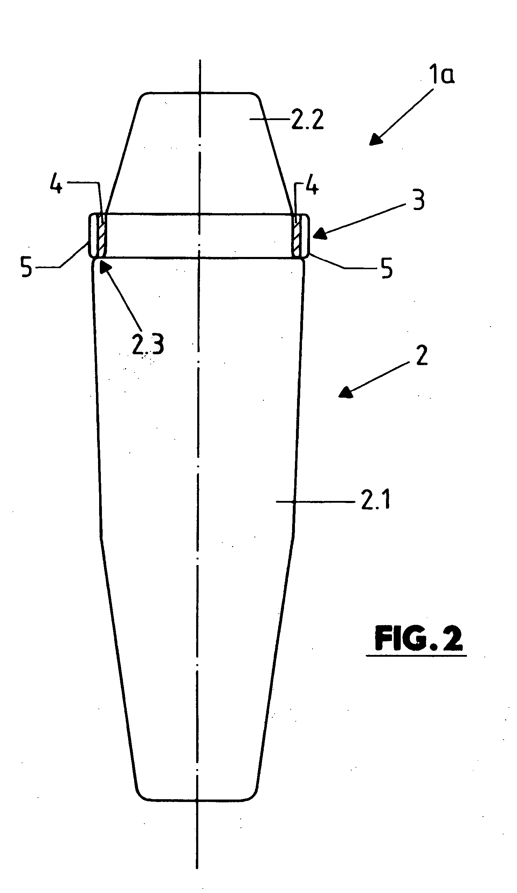

Figuren 1 und 2 jeweils in vereinfachter Darstellung und in Seitenansicht ein Zahnimplantat gemäß der Erfindung.

In der Fig. 1 ist 1 ein Zahnimplantat mit einem Implantatkörper 2, der bei der dargestellten Ausführungsform einstückig mit einem in dem Gewebe, insbesondere im Knochengewebe zu verankernden Abschnitt 2.1 und mit einem Abschnitt 2.2 ausgeführt ist, der teilweise zum Anwachsen des Binde- und Epithelgewebes sowie auch zum Befestigen eines Aufbauteils, beispielsweise einer Krone dient. Der Implantatkörper 2 ist aus einem für Implantate geeigneten Material, beispielsweise aus einem metallischen und/oder keramischen Material gefertigt.

Der Implantatkörper 2 besitzt beispielsweise einen kreisförmigen oder einen von der Kreisform abweichenden Querschnitt, beispielsweise einen ovalen Querschnitt und ist zumindest an dem Abschnitt 2.1 profiliert, beispielsweise mit einem oder aber mehreren Gewinden versehen.

Bei der dargestellten Ausführungsform ist der Implantatkörper 2 so geformt, dass am Übergang zwischen den Abschnitten 2.1 und 2.2 der Abschnitt 2.1 einen größeren Durchmesser aufweist als der Abschnitt 2.2, so dass dort eine Stufe 2.3 gebildet ist.

Die Besonderheit des Implantats 1 besteht darin, dass an dem Abschnitt 2.1 und zwar bei der dargestellten Ausführungsform im Bereich des Übergangs zwischen diesen Abschnitt und dem Abschnitt 2.2 unterhalb des stufenförmigen Bereichs 2.3 eine den Implantatkörper umgebende Manschette 3 vorgesehen ist, die aus einem Substrat 4 und aus einer außen liegenden Struktur 5 besteht und das Implantat ringartig umschließt.

Das Substrat 4 besteht beispielsweise aus einem zahntypischen Material oder aus wenigstens einer zahntypischen Grundsubstanz, beispielsweise aus einer oder mehreren Schichten aus einem natürlichen Zahnmaterial (Zahnhartsubstanz), d.h. insbesondere aus einem patienteneigenen Zahnmaterial, welches beispielsweise aus einem extrahierten Zahn oder Zahnwurzel als Scheibe oder Zahnscheibe gewonnen wurde, die dann als Manschette 3 auf den Implantatkörper 2 aufgeschoben und in geeigneter Weise fixiert. Abweichend hiervon kann Manschette 3 oder das Substrat 4 aus einem naturidentischen oder mit einem natürlichen Zahnmaterial vergleichbaren oder aber dem natürlichen Zahnmaterial entsprechenden Material gefertigt sein, z.B. aus Hydroxylapatit und/oder Polylactid. Das Substrat 4 ist an seiner der Struktur 5 abgewandten Innenseite in geeigneter Weise fest und dicht, insbesondere auch bakteriendicht, durch Verkleben mit der Außenfläche des Implantatkörpers 2 verbunden.

Die Manschette 3 bzw. deren Struktur 5 sind so ausgebildet, dass sie die Wiederherstellung des dento-alveolären Faserapparates fördern und ein direktes Einwachsen oder Anwachsen des Binde- und/oder Epithelgewebes ermöglichen. Hierfür besteht die Struktur 5 aus einem natürlichen Gewebe, vorzugsweise aus einem patienteneigenen oder patiententypischen Gewebe und dabei vorwiegend aus Teilen oder dem Gewebe des natürlichen Zahnhalteapparates bzw. des supra-alveolären dento-gingivalen Faserapparates. In jedem Fall sind die Struktur 5 bzw. das für diese Struktur gewählte Material aber so gewählt, dass nach dem Setzen des Implantats eine beschleunigte, vollständige oder zumindest teilweise Wiederherstellung des das Implantat 1 umgebenden Faserapparates und/oder ein beschleunigtes Einwachsen bzw. Anwachsen des Binde- oder Epithelgewebes erreicht wird, und zwar u.a. mit dem Vorteil, dass nach dem Implantieren bereits in kurzer Zeit ein bakteriendichter, stabiler, belastungsfähiger Verbund zwischen dem Implantat und dem dieses umgebenden Gewebe (Weichgewebe und Knochengewebe) erreicht wird.

Besteht das Substrat 4 aus einem natürlichen bzw. patienteneigenen Zahnmaterial bzw. aus der Zahnscheibe oder einem Teil hiervon, so ist die Struktur 5 bevorzugt zumindest teilweise von diesem am Zahnmaterial ohnehin vorhandenen natürlichen patienteneigenen Gewebe des natürlichen Zahnhalteapparates bzw. von dem natürlichen patienteneigenen Zell- oder Fasermaterial gebildet. Unabhängig von der Art des Material des Substrates 4 besteht weiterhin die Möglichkeit, die Struktur 5 beispielsweise durch Zellvermehrung aus natürlichen, vorzugsweise patienteneigenen oder patiententypischen Zellen herzustellen (Tissue-Engeneering), wobei das Substrat 4 dann zumindest an der außen liegenden Fläche bevorzugt aber durchgehend so ausgeführt ist, dass ein Einwachsen der die Struktur 5 bildenden Zellen in das Substrat 4 möglich ist.

Die Figur 2 zeigt als weitere Ausführungsform ein Substrat 1a, welches sich von dem Substrat 1 im Wesentlichen nur dadurch unterscheidet, dass die Manschette 3 oberhalb der Stufe 2.3 den Abschnitt 2.1 umschließend vorgesehen ist.

Beiden in den Figuren dargestellten Ausführungsformen ist gemeinsam, dass der Bereich 2.2 zum Fixieren der Krone oder eines anderen Aufbauteils vom Implantatkörper 2 gebildet ist.

### Bezugszeichenliste

- 1, 1a: Zahnimplantat
- 2: Implantatkörper
- 2.1, 2.2: Abschnitt
- 2.3: Stufe
- 3: Manschette
- 4: Substrat
- 5: Struktur

## Patentansprüche

1. Zahnimplantat mit einem Implantatkörper (2), wobei der Implantatkörper (2) an wenigstens einem Teilbereich seiner für ein Einwachsen des Knochen- und/oder Weichgewebes dienenden Außenfläche mit einer Struktur (5) versehen ist, die auf einer außen liegenden Seite eines mit dem Implantatkörper (2) verbundenen Substrates (4) vorgesehen ist, welches den Implantatkörper (2) in Form wenigstens einer Manschette (3) zirkular umschließt und dicht, insbesondere auch bakteriendicht, mit dem Implantatkörper (2) verbunden ist,
**dadurch gekennzeichnet,**
**dass** die Struktur (5) aus einem natürlichen Gewebe besteht, und dass das Substrat (4) durch Verkleben mit dem Implantatkörper verbunden ist.

2. Zahnimplantat nach Anspruch 1 oder 2, **dadurch gekennzeichnet, dass** das die Struktur (5) aufweisende Substrat (4) zumindest an einem für das Einwachsen des Binde- oder Epithelgewebes vorgesehenen Bereich des Implantatkörpers (2) vorgesehen ist.

3. Zahnimplantat nach Anspruch 1 oder 2, **dadurch gekennzeichnet, dass** das Substrat (4) zumindest teilweise aus wenigstens einer natürlichen Zahnsubstanz und/oder aus einem natürlichen Zahnhartmaterial besteht.

4. Zahnimplantat nach einem der vorhergehenden Ansprüche, **dadurch gekennzeichnet, dass** das Substrat (4) zumindest teilweise aus einem naturidentischen Material, beispielsweise aus Hydroxylapatit und/oder Polylactid besteht.

5. Zahnimplantat nach einem der vorhergehenden Ansprüche, **dadurch gekennzeichnet, dass** der Implantatkörper (2) mit einem stufenförmigen Übergang (2.3) zwischen einem Implantatkörperabschnitt (2.1) mit größeren Querschnitt und einem Implantatkörperabschnitt (2.2) mit reduziertem Querschnitt ausgeführt ist, und dass das die Struktur (5) aufweisende Substrat (4) am stufenförmigen Übergang (2.3) vorgesehen ist, und zwar an dem Abschnitt (2.1) mit größerem Durchmesser oder an dem Abschnitt (2.2) mit reduziertem Durchmesser.

6. Zahnimplantat nach einem der vorhergehenden Ansprüche, **dadurch gekennzeichnet, dass** die Struktur (5) von an einem am natürlichen Zahnmaterial vorhandenen natürlichen Zell- oder Fasermaterial gebildet ist.

7. Zahnimplantat nach einem der vorhergehenden Ansprüche, **dadurch gekennzeichnet, dass** die Struktur (5) durch Zellvermehrung oder Differenzierung aus natürlichen, vorzugsweise patienteneigenen oder patiententypischen, Zellen erzeugt ist.

8. Zahnimplantat nach einem der vorhergehenden Ansprüche, **dadurch gekennzeichnet, dass** der Implantatkörper (2) einen Bereich zum Fixieren eines Aufbauteils bildet und hierfür zumindest mit diesem Bereich über das die Struktur (5) aufweisende Substrat (4) axial vorsteht.

9. Zahnimplantat nach einem der vorhergehenden Ansprüche, **dadurch gekennzeichnet, dass** der Implantatkörper (2) einen kreisförmigen oder einen von der Kreisform abweichenden Querschnitt aufweist.

10. Zahnimplantat nach Anspruch 9, **dadurch gekennzeichnet, dass** zumindest der im Knochengewebe zu verankernde Abschnitt (2.1) des Implantatkörpers (2)mit einem oder mehreren Gewinden versehen ist.

## Claims

1. A dental implant having an implant body (2), wherein the implant body (2) is provided with a structure (5) on at least one partial area of its outer surface, said surface serving to allow ingrowth of bone tissue and/or soft tissue, said structure being provided on an exterior side of a substrate (4) that is connected to the implant body (2), said substrate circularly surrounding the implant body (2) in the form of at least one cuff (3) and being tightly connected to the implant body (2), in particular in a bacteria-proof connection, **characterized in that** the structure (5) consists of a natural tissue, and the substrate (4) is attached to the implant body by adhesive bonding.

2. Dental implant according to claim 1 or 2, **characterized in that** the substrate (4) having the structure (5) is provided on at least one area of the implant body (2), which is in turn provided for the ingrowth of the connective tissue or epithelial tissue.

3. Dental implant according to claim 1 or 2, **characterized in that** the substrate (4) consists at least partially of at least one natural tooth substance and/or a natural tooth hard material.

4. Dental implant according to any one of the preceding claims, **characterized in that** the substrate (4) consists at least partially of a material that is identical to the natural material, for example, hydroxylapatite and/or polylactide.

5. Dental implant according to any one of the preceding claims, **characterized in that** the implant body (2) is designed with a step-shaped transition (2.3) between an implant body section (2.1) having a larger cross section and an implant body section (2.2) having a reduced cross section, and the substrate (4) having the structure (5) is provided on the step-shaped transition (2.3), namely on the section (2.1) having a larger diameter or on the section (2.2) having a reduced diameter.

6. Dental implant according to any one of the preceding claims, **characterized in that** the structure (5) is formed by a natural cellular or fibrous material present on the natural tooth material.

7. Dental implant according to any one of the preceding claims, **characterized in that** the structure (5) is created by a cellular reproduction or differentiation from natural cells, preferably the patient's own cells or cells typical of the patient's own cells.

8. Dental implant according to any one of the preceding claims, **characterized in that** the implant body (2) forms an area for fixation of an add-on part and therefore axially protrudes with at least this area beyond the substrate (4) having the structure (5).

9. Dental implant according to any one of the preceding claims, **characterized in that** the implant body (2) has a circular cross section or a cross section that deviates from the circular shape.

10. Dental implant according to claim 9, **characterized in that** at least the section (2.1) of the implant body (2), which is to be anchored in the bone tissue, is provided with one or more threads.

## Revendications

1. Implant dentaire, comprenant un corps d'implant dentaire (2), dans lequel le corps d'implant dentaire (2) est muni sur au moins une zone partielle de sa surface extérieure servant à l'ancrage du tissu osseux et/ou mou d'une structure (5) prévue sur une face située à l'extérieur d'un substrat (4) relié au corps d'implant (2) et entourant de manière circulaire le corps d'implant (2) sous la forme d'au moins un manchon (3) et relié au corps d'implant (2) de manière étanche, en particulier étanche aux bactéries, **caractérisé en ce que** la structure (5) est composée d'un tissu naturel et **en ce que** le substrat (4) est relié au corps d'implant par collage.

2. Implant dentaire selon la revendication 1 ou 2, **caractérisé en ce que** le substrat (4) présentant la structure (5) est prévu au moins au niveau d'une zone du corps d'implant (2) prévue pour l'ancrage du tissu conjonctif ou de l'épithélium.

3. Implant dentaire selon la revendication 1 ou 2, **caractérisé en ce que** le substrat (4) se compose au moins en partie d'au moins une substance dentaire naturelle et/ou d'une matière dure dentaire naturelle.

4. Implant dentaire selon l'une quelconque des revendications précédentes, **caractérisé en ce que** le substrat (4) se compose au moins en partie d'un matériau identique au naturel, par exemple d'hydroxylapatite et/ou de polylactide.

5. Implant dentaire selon l'une quelconque des revendications précédentes, **caractérisé en ce que** le corps d'implant (2) est réalisé avec une transition à gradins (2.3) entre la partie de corps d'implant (2.1) de la plus grande section transversale et une partie de corps d'implant (2.2) de section transversale réduite, et **en ce que** le substrat (4) présentant la structure (5) est prévu au niveau de la transition à gradins (2.3), notamment à la partie (2.1) du plus grand diamètre ou à la partie (2.2) de diamètre réduit.

6. Implant dentaire selon l'une quelconque des revendications précédentes, **caractérisé en ce que** la structure (5) est formée par de la matière cellulaire ou fibreuse naturelle présente au niveau de la matière dentaire naturelle.

7. Implant dentaire selon l'une quelconque des revendications précédentes, **caractérisé en ce que** la structure (5) est générée par prolifération cellulaire ou différenciation à partir de cellules naturelles, de préférence propres au patient ou typiques pour le patient.

8. Implant dentaire selon l'une quelconque des revendications précédentes, **caractérisé en ce que** le corps d'implant (2) forme une zone permettant de fixer une superstructure et dépasse à cet effet au moins par cette zone axialement du substrat (4) présentant la structure (5).

9. Implant dentaire selon l'une quelconque des revendications précédentes, **caractérisé en ce que** le corps d'implant (2) présente une section transversale circulaire ou autre que circulaire.

10. Implant dentaire selon la revendication 9, **caractérisé en ce qu'**au moins la partie (2.1) du corps d'implant (2) à ancrer dans le tissu osseux est munie d'un ou de plusieurs filetages.
